# EUROPÄISCHE PATENTSCHRIFT

(11) **EP 2 223 742 B1**
(45) Veröffentlichungstag und Bekanntmachung des Hinweises auf die Patenterteilung: **02.05.2012**
(21) Anmeldenummer: 09075059.7
(22) Anmeldetag: 06.02.2009
(51) Int. Cl.: B01J 19/10

(54) **Fluidreaktor**
Fluid reactor
Réacteur à fluide

(43) Veröffentlichungstag der Anmeldung: 01.09.2010
(73) Patentinhaber: BANDELIN electronic GmbH & Co. KG, 12207 Berlin (DE)
(72) Erfinder: Jung, Rainer, 13125 Berlin (DE); Häsen, Claudia, 16727 Oberkrämer, OT Eichstädt (DE); Kähler, Sebastian, 13158 Berlin (DE)
(74) Vertreter: Pfenning, Meinig & Partner GbR

(56) Entgegenhaltungen:
- WO-A-98/22277
- US-A- 4 168 295
- US-A- 5 384 508
- US-A1- 2004 081 591
- US-B1- 6 361 747

## Beschreibung

Die Erfindung betrifft eine rohrförmige elektroakustische Vorrichtung zur Erzeugung und Abstrahlung intensiver Ultraschallenergie mit konzentrischer Strahlcharakteristik für flüssige oder pastöse Medien. Der erfindungsgemäße Aufbau erlaubt trotz einer variabel gestaltbaren Ausführung eine einfache Herstellungstechnologie und eine Verbesserung der Verfügbarkeit hoher Ultraschalleistungen für industriell nutzbare rohrförmige Ultraschallreaktoren im niederfrequenten Leistungsbereich von ca. 20kHz bis 100kHz.

In der Ultraschall-Leistungstechnik haben sich bei den niederfrequenten Anwendungen für industrielle Zwecke, wie z. B. in der Ultraschallreinigung und sonochemischen Prozesstechnik, überwiegend piezoelektrische Wandlersysteme durchgesetzt.

In der Reinigungstechnik werden so genannte Ultraschall-Tauchschwinger, -Schwingplatten oder direkt mit piezoelektrischen Wandlern bestückte Metallwannen für die Flüssigkeitsbeschallung verwendet. In der gängigen Patent- und Ultraschalliteratur sind sehr viele Bau- und Ausführungsformen beschrieben, auf die im Einzelnen nicht eingegangen werden kann.

Überwiegend arbeiten die sandwichartig aufgebauten Wandler im longitudinalen Schwingungsmodus, sind je nach Leistung zu Gruppen auf der Beschallungsfläche verdrahtet und werden mit einem hochfesten Kleber auf die Edelstahlmembran des jeweiligen Behältnisses geklebt.

Diese Methode gestattet nur die Einbringung größerer Ultraschallenergien über ebene Flächen, bis hin zu einigen Kilowatt Ultraschalleistung pro Badvolumen.

Für den Aufbau einer effizienten rohrförmigen Vorrichtung, mit konzentrischer Rundstrahlcharakteristik, ist sie nicht geeignet.

In der Prozesstechnik und insbesondere bei den Durchflussreaktoren gibt es verschiedene rohrförmige Bauformen für eine intensive Beschallung flüssiger oder pastöser Medien.

Aus der Labortechnik bekannt sind so genannte Ultraschall-Desintegratoren, die zwar hochintensiv, aber über eine sehr kleine Fläche Ultraschallenergie in rohrförmige Durchflussgefäße abstrahlen. Die Gefäße sind meist sehr klein, der Durchsatz entsprechend gering.

Bekannt sind auch industrielle Ultraschall-Rohrresonatoren, die über eine innere oder äußere Rohrbestückung mit piezoelektrischen Wandlern, je nach Länge und Durchmesser, eine größere Abstrahlfläche bereitstellen und damit für Durchflussreaktoren mit entsprechenden Flüssigkeitsdurchsatz vielseitig Verwendung finden.

In der DE 302 75 33 ist ein derartiger Resonator beschrieben. Ein wesentlicher Nachteil der verschiedenen Bau- und Ausführungsformen ist die begrenzte, und verglichen mit den in der Reinigungstechnik applizierten Systemen, sehr kleine piezoelektrische Antriebsleistung von meist nur einem oder zwei Wandlern.

Dazu kommt, dass die longitudinale Ultraschallamplitude der Wandler-Antriebsfläche in eine transversale Rohrschwingung über eine Querschnittsänderung des Rohres umgewandelt wird, mit dem Ergebnis einer niedrigen Flächenleistung.

In der EP 0 455 837 ist ein so genannter Stabwandler beschrieben, der ähnlich dem geschilderten Rohrresonator aufgebaut ist. Der Unterschied besteht in der longitudinalen Ultraschallanregung eines Vollstabes bei seiner Resonanzfrequenz, durch einen oder zwei jeweils stirnseitig montierten piezoelektrischen Wandlern. Auch hier sind die Nachteile in der begrenzten Anregungsenergie und notwendigen transversalen Schwingungstransformation begründet.

Eine weitere Möglichkeit ist in der DE 41 38 713 angegeben. Hier sind ebenfalls mit einem, bzw. einer begrenzten Anzahl von Antriebswandlern, ein Stabresonator ähnlich der EP 0455837, und ein stabförmiges Biegeresonatorsystem beschrieben. Die Nachteile entsprechen den oben gemachten Ausführungen zu Stab- und Rohrresonatoren.

In der DE 197 24 189 ist eine rohrförmige elektroakustische Vorrichtung beschrieben, die lang gestreckte Kopplungsträger mit elektroakustischen Wandlern aufweist, welche in Längsrichtung eines Rohres mit dessen Innenwandung verbunden sind. Mit diesem Aufbau wird quasi ein rohrförmiger Tauchschwinger aufgebaut, der je nach Bestückungsausführung eine entsprechende Rundstrahlcharakteristik zur Abstrahlung der Schallenergie nach Außen besitzt. Nachteil dieser Ausführung ist die begrenzte Lebensdauer durch den engen Innenaufbau innerhalb des Rohres, die keine vernünftige Abführung von Verlustwärme im Dauerbetrieb zulässt und darüber hinaus im Defektfall ein Austausch von Komponenten im Innern des Rohres fast unmöglich macht.

Die US 2004/081591 A1 und das US-Patent US 4 168 295 zeigen ein Verfahren sowie eine Vorrichtung zur Behandlung von Flüssigkeiten mit Ultraschall, die im Wesentlichen parallel zur Rohrachse verlaufende, außenliegende elektroakustische Wandlerschienen mit jeweils mehreren elektroakustischen Wandlern zeigen.

Die US 5384 508 zeigt eine vergleichbare Vorrichtung mit modularem Aufbau.

Aufgabe der vorliegenden Erfindung ist es, auf Basis bekannter Montage- und Herstellungstechnologien eine einfache, rohrförmige elektroakustische Vorrichtung mit effektiver Schallfeldcharakteristik zu schaffen, die sich zur Erzeugung und Abstrahlung intensiver Ultraschallenergie für flüssige oder pastöse Medien eignet und gleichzeitig bestehende Nachteile des Standes der Technik beseitigt.

Erfindungsgemäß wird diese Aufgabe durch die in Anspruch 1 genannten Merkmale gelöst.

Anspruch 1 betrifft eine Vorrichtung zur Beaufschlagung eines zumindest bereichsweise mit Fluid befüllten Rohres mit Ultraschall, enthaltend mindestens zwei, im Wesentlichen parallel zur Zentralachse des Rohres verlaufende, an der äußeren Wand des Rohres gegenüberliegend angeordnete elektroakustische Wandlerschienen mit jeweils mehreren elektroakustischen Wandlern zur Ultraschallbeaufschlagung des innerhalb des Rohres befindlichen Fluids, wobei der fluidbefüllte Raum des Rohres so ausgestaltet ist, dass die größte orthogonale Abmessung des fluidbefüllten Raums von einer Ultraschall emittierenden Innenfläche des Rohrs zur nächsten fluidbegrenzenden Fläche kleiner als die Schallwellenlänge λ des Fluides ist.

Es ist vorgesehen, dass der fluidbefüllbare Raum einen Eingang für ein fließendes Fluid hat, wobei Ein- und Ausgang des Fluids an derselben Stelle oder an verschiedenen Stellen angeordnet sind. Hiermit wird ermöglicht, dass im Batchbetrieb einzelne Flüssigkeitschargen mit Ultraschall beaufschlagt werden können (hierfür bietet sich insbesondere die Variante an, bei der Ein- und Ausgang an derselben Stelle angeordnet sind). Alternativ kann auch ein Durchflussbetrieb, vorzugsweise im Dauerbetrieb, vorgesehen werden (hierbei sind vorzugsweise Ein- und Ausgang an verschiedenen Stellen vorgesehen). Es kann hierbei ein Durchfluss des Mediums erfolgen, durch entsprechende Druckbeaufschlagung kann die Strömungsgeschwindigkeit und somit der Durchsatz des Fluids bzw. die mittlere Beaufschlagungszeit jedes Flüssigkeitsteilchens mit Ultraschall beeinflusst werden.

Zur Vergleichmäßigung der Beaufschlagung sämtlicher Flüssigkeitsteilchen bzw. auch um diese näher an die innere Rohrwandung des Rohres heranzuführen, sind vorzugsweise im Bereich des Ein- und/oder Ausgangs Wirbelelemente zur Beaufschlagung eines Fluids, insbesondere eines einfließenden Fluids, mit einem bestimmten Drall vorgesehen.

Mit dieser Vorrichtung wird eine besonders intensive Beschallung erreicht, die auch für industrielle Anwendungen mit extrem hohen Ultraschall-Leistungsanforderungen, beispielsweise bei der Beaufschlagung von Abwässern im Durchflussverfahren durch das Rohr, anwendbar sind. Weitere Einsatzmöglichkeiten sind beispielsweise die Entgasung von farbstoff- und fotografischen Lösungen, die CO₂-Entgasung aus wässrigen Reaktanden/Lösungen, die Bakterienabtötung bei der Wasser- und Abwasseraufbereitung, die Entkeimung von organischen Inhaltsstoffen in industriellen Spülflüssigkeiten zur Wiederverwendung oder auch die Desinfektion von keim- und parasitenbelasteten Fischzucht-Kreislaufwässern. Insgesamt ist die Erfindung besonders geeignet zur Intensivierung industrieller, biotechnologischer und chemischer Prozesse beim Dispergieren, Emulgieren, Entgasen und Deaglomerieren als auch zum Beschleunigen chemischer Reaktionen.

Durch diese Anordnung kann also ein im Rohr befindliches Fluid (hier ist alles denkbar, von verschmutztem Wasser bis hin zu dickflüssigem Klärschlamm) intensiv mit Ultraschall beaufschlagt werden. Insbesondere durch die äußere Anordnung der sich gegenüberliegenden elektroakustischen Wandler ist hierbei eine sehr starke Ultraschallbeaufschlagung möglich, außerdem bietet die Befestigung der elektroakustischen Wandler an der äußeren Seite die Möglichkeit des Austauschs bzw. der Wartung einzelner elektroakustischer Wandler, dies ist im Praxisbetrieb betriebswirtschaftlich sehr vorteilhaft.

Eine Weiterbildung sieht vor, die Abmessung des fluidbefüllten Raums von einer Ultraschall emittierenden Innenfläche des Rohrs zur nächsten fluidbegrenzenden Fläche veränderbar zu gestalten, so dass sie entsprechend dem Hauptanspruch immer kleiner als die Schallwellenlänge λ des Fluides ist. Dazu wird innerhalb des Rohres eine innere Wand so angeordnet, dass zwischen innerer Wand und dem Rohr als äußerer Wand ein umlaufender Spaltraum gegeben ist.

Vorzugsweise wird zur gezielten Einstellung der Spaltraummaße die innere Wand als austauschbares erstes Innenwandmodul ausgeführt, das austauschbar ist durch ein zweites Innenwandmodul mit einer größeren bzw. kleineren Querschnittsfläche zur Verringerung bzw. Vergrößerung des Spaltraumvolumens. Das Innenwandmodul kann hierbei hohl sein und/oder luftbefüllt sein, dies ist für den Wirkungsgrad der Ultraschallvorrichtung vorteilhaft.

Hierdurch kann die Strömung bzw. das Fluid innerhalb der äußeren Wand sehr intensiv und gezielt mit Ultraschall beaufschlagt werden. Die dadurch praktisch beliebig einstellbare Abmessung des Spaltraumvolumens in Richtung Rohrachse ermöglicht auch für ein relativ schnell fließendes Fluid eine starke Ultraschallbeaufschlagung, da das Medium in unmittelbarer Nähe der elektroakustischen Wandler vorbeifließt.

Der Rohrinnendurchmesser als auch die einstellbare Spaltabmessung im Rohr richten sich nach der Schallwellenlänge des Fluides, welche nach Fluidart, Temperatur und Betriebsfrequenz unterschiedlich sein kann. Für die Anwendung in der erfindungsgemäßen Vorrichtung beträgt sie vorzugsweise zwischen 1,0 cm und 8,0 cm, besonders vorzugsweise zwischen 1,0 cm und 2,0 cm, so dass der Rohrinnendurchmesser bzw. der Spaltraum (bei einem Innenwandmodul) entsprechend dem Hauptanspruch kleiner zu gestalten sind. Beispielsweise beträgt die Schallwellenlänge λ für Wasser 5,68 cm, bei 20° C und einer Ultraschallfrequenz 25 kHz.

Eine Weiterbildung sieht vor, dass ein Wirbelelement vorzugsweise an einem axialen Ende des fluidbefüllbaren Raums angeordnet ist. Dies ermöglicht hierbei eine Beeinflussung des Fließverhaltens des Fluids im gesamten mit Fluid befüllbaren Raum.

Hierbei ist das Wirbelelement sehr frei gestaltbar, es kann sogar eine größere Querschnittsfläche haben als der unmittelbar angrenzende fluidbefüllbare Raum, insbesondere wenn es sich dabei um einen Ringraum bzw. Spaltraum handelt. Hierdurch wird eine Beschleunigung der Strömung im Bereich des Wirbelelements und im Rohr erreicht und der auf die Flüssigkeitssäule aufgebrachte Drall verstärkt sich.

Das Wirbelelement kann insbesondere als Scheibe mit herausstehenden Flügeln(Flügelrad) ausgeführt sein.Es können auch über den Querschnitt der Scheibe verteilt mehrere Wirbelzonen vorgesehen werden, welche beispielsweise radial über die Scheibenfläche einen unterschiedlichen Drall erzeugen und somit ein dreidimensionales Fließmuster schaffen. Die Ausführung des Wirbelelementes mittels eines Rohres oder rohrförmigen konischen Körpers mit einer Innen oder Außen aufgeprägten Wendelstruktur für eine drehende Fluidbeeinflussung, ist ebenfalls möglich.

Ein rohrförmiger Fluidreaktor ist aus mehreren Gründen vorteilhaft, da hier kostengünstiges Ausgangsmaterial gegeben ist, vollständige Symmetrie bezüglich der Zentralachse und außerdem geringe Totzonen gegeben sind. Außerdem wird bei einer dauernden Ultraschallbelastung das Dauerstandverhalten von Rohren erfahrungsgemäß am besten sein. Erfindungsgemäß wird unter einem "Rohr" ein Körper verstanden, bei dem der größte Außendurchmesser mindestens das 5-fache der größten Wandstärke beträgt. Hierbei wird in erster Linie von kreisrunden Querschnitten ausgegangen, Formabweichungen (etwa Abflachungen zur Montage von Wandlerschienen oder ovale bzw. eckige Formabweichungen sind allerdings nicht ausgeschlossen.

Die Gesamtleistung der elektroakustischen Wandler beträgt vorzugsweise zwischen 100 und 10000 W und/oder die Betriebsfrequenz der elektroakustischen Wandler beträgt vorzugsweise zwischen 20 kHz und 100 kHz.

Besonders vorteilhaft ist, dass jeweils gegenüberliegend mehrere in einer Reihe angeordnete elektroakustische Wandler an der äußeren Wand befestigt sind. Hierbei kann auf modulare Weise praktisch beliebig hohe Ultraschallleistung auf ein Fluid aufgebracht werden. Zum einen kann durch die Variation der Länge der Wandler hintereinander bzw. den Austausch unterschiedlicher Wandler eine Variation von Leistung und Ultraschall-Betriebsfrequenz erfolgen. Zum anderen kann auch noch über die Wahl der Rohr-Querschnittsfläche, die von der äußeren Wand eingeschlossen wird bzw. sogar die Querschnittsreduktion durch ein Innenwandmodul im Rohr das zu beschallende Innenvolumen variiert werden. Hinzu kommt, dass die Strömungsgeschwindigkeit regelbar ist durch entsprechende Pumpenantriebe, außerdem ist sogar noch der Drall bzw. die Richtung bzw. der Verwirbelungsgrad der Strömung bestimmbar, insbesondere durch erfindungsgemäße Wirbelelemente.

Die elektroakustischen Wandler weisen vorzugsweise einen Kopplungsträger auf, der an die Kontur der äußeren Wand angepasst ist. Hierzu ist vorteilhaft, dass mehrere in Reihe nebeneinander angeordnete elektroakustische Wandler einen gemeinsamen Kopplungsträger haben, der einerseits auf die äußere Wand aufgebracht ist (beispielsweise durch verkleben oder Verschweißen) und mit dem eine Verschraubung der piezoelektrischen Elemente erfolgt, um hier möglichst verlustfrei eine hohe Ultraschallleistung einbringen zu können. Mehrere Wandler auf einem Kopplungsträger bilden dann eine elektroakustische Wandlerschiene.

Eine besonders vorteilhafte Weiterbildung sieht vor, dass mehrere, vorzugsweise zwei, vier oder sechs elektroakustische Wandlerschienen bezüglich der Zentralachse gleichmäßig über den Außenumfang der äußeren Rohrwand verteilt sind, wobei sie sich bezüglich der Zentralachse vorzugsweise gegenüberliegen. Es müssen aber nicht nur gegenüberliegend jeweils eine akustische Wandlerschiene vorgesehen sein, sondern es können hier auch mehrere Wandlerschienen vorliegen, die im Wesentlichen entlang der Zentralachse verlaufen, die sich jeweils paarweise gegenüberliegen. Hierdurch wird zum einen eine extrem hohe Gesamtleistung auf den mit Fluid befüllbaren Raum aufgebracht, außerdem dient dies der Vergleichmäßigung der Ultraschallbeaufschlagung, insbesondere bei mit Spalträumen ausgeführten fluidbefüllbaren Räumen.

Eine besonders vorteilhafte Weiterbildung sieht außerdem vor, dass die sich bezüglich der Zentralachse jeweils paarweise gegenüberstehenden, einzelnen elektroakustischen Wandler so montiert sind, dass sie zum gleichen Zeitpunkt in gleicher oder entgegengesetzte Richtung schwingen bzw. Dies wird üblicherweise durch eine verschiedene Anordnung der elektrisch polarisierten Piezoelemente in den Wandlern erreicht. Vereinfacht gesagt, weisen die Piezoelement-Anordnungen die gleiche oder entgegengesetzte Polaritätsrichtung auf. Meist weisen die elektroakustischen Wandler zwei Piezoelemente auf, es können aber auch nur eines oder mehr als zwei sein. Insbesondere durch gegenüber liegende Wandler wird erreicht, dass eine Eigenbewegung der äußeren Rohrwand, die vorzugsweise aus Metall ausgeführt ist, erreicht wird. Nun ist zu sagen, dass die absolute Maßänderung des Rohres eher klein ist, allerdings sind bei den in der Regel inkompressiblen Flüssigkeiten hierdurch bereits extreme Druckveränderungen erreichbar, die das Ultraschallfeld nachhaltig beeinflussen.

Die erfindungsgemäße Lösung wird nun konkreter an Hand eines Rohres beschrieben, dass mit von Außen angebrachten gleich langen Wandlerschienen bestückt ist, wobei dies keine Bedingung darstellt. Je nach Rohrdurchmesser werden mehrere Wandlerschienen längs des Rohres in Achsrichtung aufgebracht, mit einer paarigen Anordnung von mindestens zwei zueinander gegenüberliegenden Wandlerschienen gleicher Resonanzfrequenz.

Aufgrund der Tatsache einer begrenzten Ultraschall-Kavitationswirkung in Durchmesserrichtung des Rohres bei kontinuierlichem Durchflussbetrieb, sollte der Rohrdurchmesser vorzugsweise nicht zu groß gewählt werden. Für niederfrequente Wandlerschienen bis 100 kHz ist er deshalb vorzugsweise nicht über 300 mm Innendurchmesser zu wählen.

Beispielsweise zwei oder vier sich gegenüberstehende Wandlerschienen mit elektroakustischen Wandlern gleicher Resonanzfrequenz werden auf dem Außenrohr so angebracht, dass sie sich entsprechend ihrem Wandler-Teilungsmaß auf der Schiene, immer genau mit einem elektroakustischen Wandler direkt gegenüberstehen. Auf den Rohrdurchmesser bezogen, können dass Anordnungen bei 0° und 180° oder auch bei 90° und 270° sein. Bei großen Rohrdurchmessern können sich jeweils auch zwei gleiche Schienen, parallel nah beieinander angeordnet, gegenüberstehen.

Die eingebauten Piezokeramiken in den Wandlerschienen werden zum Beispiel nun so angeordnet, dass gegenüberliegende Wandler bei gemeinsamer hochfrequenter elektrischer Anregungsspannung zum gleichen Schwingungszeitpunkt die gleiche Auslenkung ausführen - also gegeneinander arbeiten - oder sich entgegen gesetzt verhalten; das heißt der eine dehnt sich aus, während der andere sich zusammenzieht. Die jeweilige Montage der Piezokeramiken wird üblicherweise durch ein (+)- oder (-)-Zeichen verdeutlicht. Mit der zuvor beschriebenen Anordnung ist eine deutliche Veränderung der Resonanzfrequenz als auch des Schall- und Kavitationsfeldes im Rohrvolumen erreichbar, bedingt durch eine unterschiedliche Druckbeaufschlagung bzw. zusätzliche minimale Rohreigenbewegung.

Sich gegenüber liegende identische Wandlerschienen weisen die gleiche Länge und die gleiche Wandleranzahl auf. Es ist aber auch ein bestimmter Versatz der Schienen entsprechend ihrem Wandler-Teilungsmaß denkbar, um im Ein- oder Auslassbereich des Rohres andere Schallverhältnisse vorzugeben. Letztlich kann es für bestimmte Sonderfälle auch vorteilhaft sein, gegenüber liegende Wandlerschienen mit unterschiedlichen Resonanzfrequenzen auszustatten, um gezielt andere Schallfeldverhältnisse zu erzeugen.

Um eine vollständige Medienbeschallung im Durchfluss zu erzielen, wird das flüssige oder pastöse Medium mittels einer am Rohreingang fest angeordneten durchlässigen Flügel- oder Wirbelscheibe vorzugsweise in eine Drehbewegung innerhalb des Rohres versetzt. Flügelanzahl und Flügelstellung dieser Wirbelscheibe lassen dabei eine Vielzahl an technischen Realisierungsmöglichkeiten zu.

Als weiteres Mittel für eine effektive Ultraschallwirkung kann das Beschallungsvolumen durch einen im Rohr angebrachten rotationssymmetrischen Verdrängungskörper soweit verringert werden, dass ein hoch intensives Kavitationsnahfeld im Spalt zwischen Rohr und Verdrängungskörper entsteht. Anbringung und Form des Verdrängungskörpers sind dabei auf eine möglichst wirbelfreie Medien-Durchströmung auszurichten.

Zum besseren Verständnis wird die Erfindung anhand von Ausführungsbeispielen näher erläutert.

Dabei zeigen:

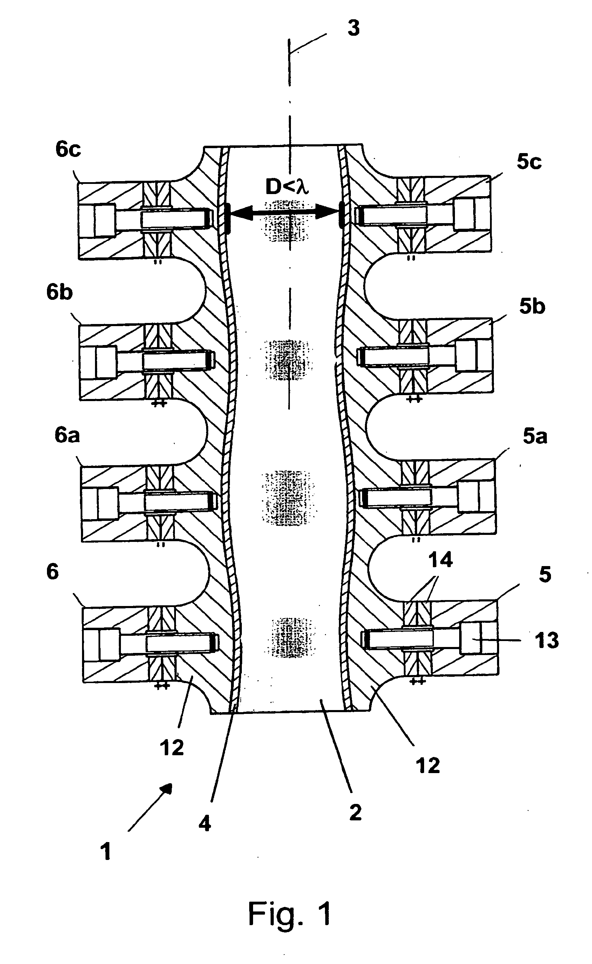

- Fig. 1: eine Schnittdarstellung durch ein Rohr mit zwei gegenüberliegend angebrachten Wandler- schienen gleicher Resonanzfrequenz, wobei die Piezokeramiken in den sich jeweils ge- genüberstehenden Wandlern so angeordnet sind, dass sie gegeneinander arbeiten. Hierdurch können besonders intensive Fokus- zonen erhöhter Intensität in der Mitte des Rohres erzielt werden, angedeutet durch die einzelnen dunkleren Fluidabschnitte.
- Fig.: 2 eine Schnittdarstellung durch ein Rohr mit zwei gegenüberliegend angebrachten Wandler- schienen gleicher Frequenz, wobei die Pie- zokeramiken in den Wandlern so angeordnet sind, dass sie quasi "miteinander" zum gleichen Schwingungszeitpunkt arbeiten. Während der eine Wandler sich ausdehnt, zieht sich der gegenüberliegende gerade zu- sammen. Dadurch wird eine besonders gleich- mäßige Intensitätsverteilung des Schallfel- des im Rohr erreicht, angedeutet durch die gleichmäßige Fluidfärbung.
- Fig. 3: zeigt eine Schnittdarstellung in Längsrich- tung mit Draufsicht einer Ausführungsform mit 4 gleichen Wandlerschienen einer Fre- quenz, angebracht in gleicher Höhe am Rohr und bei 0°, 90°, 180°und 270° bezogen auf den Durchmesser des Rohres, wobei das unte- re Rohrende den Medieneingang zeigt, verse- hen mit einer durchlässigen Flügel- oder Wirbelscheibe 9, die im Durchflussbetrieb zu einer Drehbewegung des Mediums im Rohr führt.
- Fig. 4: zeigt wie Fig. 3 eine Rohrausführung mit 4 Wandlerschienen und Wirbelscheibe 9, wobei im Rohr zusätzlich ein rohrförmiger Ver- drängungskörper 15 angeordnet ist, der für einen äußerst intensiven Kavitationsspalt im entstehenden Ring- oder Spaltvolumen 11 zwischen Reaktorrohr und Verdrängungskörper sorgt.
- Fig. 5: zeigt eine Wirbelscheibe 9 zur Erzeugung eines Dralls eines in der Vorrichtung ge- führten Fluids.
- Fig. 6a: zeigt eineelektroakustische Wandlerschiene mit mehreren Wandlern 5, 5a auf einem Kopp- lungsträger 12 in einer perspektivischen Ansicht und
- Fig. 6b: zeigt einen Ausschnitt vom Längsschnitt des Gegenstands nach Fig. 6a.

Fig. 1 zeigt eine erfindungsgemäße Vorrichtung 1 zur Beaufschlagung eines mit Fluid befüllten Raums 2 mit Ultraschall (das Fluid ist zum Beispiel Wasser von 20°C Temperatur, die Schallwellenlänge λ beträgt bei 25 kHz etwa 5,68 cm). Dieser Raum 2 ist als Rohr ausgeführt und hat eine Zentralachse 3. Der Innendurchmesser D beträgt vorzugsweise weniger als die Schallwellenlänge λ von Wasser (Abstand von ultraschallemittierender Innenfläche bis zur gegenüber liegenden Innenfläche des Rohres). Außen an der Rohrwand 4 sind sich gegenüberliegend elektroakustische Wandler 6, 6a, 6b, 6c (linksseitig) bzw. 5, 5a, 5b, 5c (rechtsseitig) angeordnet. Diese akustischen Wandler beaufschlagen ein im Raum 2 befindliches Fluid mit Ultraschall, beispielsweise mit Ultraschall einer Frequenz von 25 kHz. Rechtsseitig ist Außen an der Wand 4 ein Kopplungsträger 12 angebracht, der mit den vier nebeneinander liegenden elektroakustische Wandlern 5, 5a, 5b, 5c verschraubt eine Wandlerschiene bildet. Dasselbe gilt linksseitig für die Wandler 6, 6a, 6b und 6c. Generell sind je Wandler immer zwei Piezokeramiken 14 mit dem Kopplungsträger 12 verbunden, eine Schraube 13 mit einem Konterstück sorgt hierbei für eine Befestigung bzw. Anpressung der Piezokeramiken an den Kopplungsträger 12. Alle Piezokeramiken werden über einen nicht dargestellten elektrischen Versorgungsanschluss zur Abgabe von Ultraschall angeregt. Die Wandler 5 und 6 sind zueinander koaxial fluchtend angeordnet, d.h. die Schrauben 13 sind vorzugsweise fluchtend zueinander angeordnet (man könnte auch sagen, dass die elektroakustischen Wandler 5 und 6 symmetrisch bzw. punktsymmetrisch bezüglich der Zentralachse 3 zueinander liegen). Dasselbe gilt linksseitig entsprechend für die Paare 5a, 6a sowie 5b, 6b und 5c, 6c.

Fig. 1 zeigt hierbei die Besonderheit, dass in den sich jeweils gegenüberliegenden Paaren elektroakustischer Wandler - zum Beispiel 5 und 6 - die Polarisations-Anordnung der Piezokeramiken jeweils gleich ist. Verdeutlicht wird dies durch die Kennzeichnung der Wandler 5 und 6 jeweils mit zwei Pluszeichen(+). Im Betrieb führt dies dazu, dass diese "gegeneinander" arbeiten, was in der Fig. 1 durch eine zeichnerisch übertriebene Querschnittsverringerung der äußeren Wand 4 in diesem Bereich dargestellt ist.

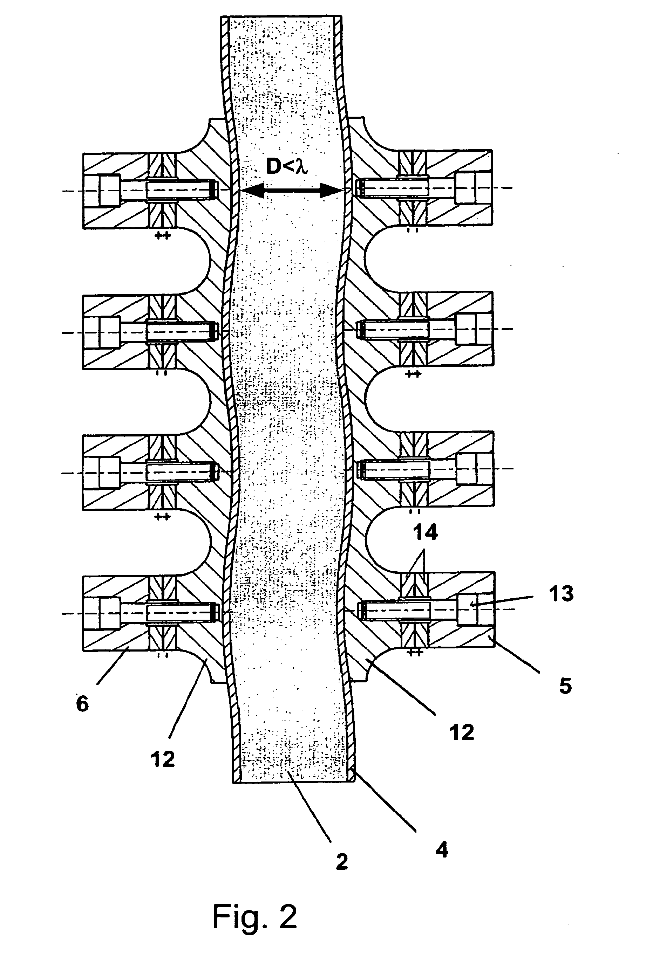

Die Paare 5a und 6a sind mit der umgekehrten, aber jeweils gleichen Anordnung an Piezokeramiken aufgebaut, gekennzeichnet deshalb mit jeweils zwei Negativzeichen(-). Durch die zeitgleich entgegen gesetzte Bewegung/Auslenkung ergibt sich jedoch hier eine Querschnittsvergrößerung der äußeren Wand 4. Durch die gleiche Polaritätsanordnung von Piezokeramiken in jeweils sich gegenüber stehenden Wandlern und die entgegen gesetzte Anordnung bei nebeneinander liegenden Wandler einer Schiene(also in der Reihe 5, 5a, 5b, 5c alternierend, entsprechendes gilt für die gegenüberliegende Seite) ergibt sich das in Fig. 1 gezeigte Bild, wobei die Maßänderung der Wand 4 durch die Ultraschallbeaufschlagung stark übertrieben dargestellt ist. Dasselbe gilt für die Darstellung in Fig. 2.

Der Vorteil der in Fig. 1 gezeigten Vorrichtung liegt darin, dass dadurch im mittleren Bereich des Rohres sehr intensiv Ultraschall fokussiert werden kann.

Fig. 2 zeigt eine Vorrichtung zur Erzeugung von Ultraschall, wobei im Wesentlichen auf die in Fig. 1 beschriebene Vorrichtung verwiesen wird. Unterschiedlich ist hier allerdings die Polaritätsanordnung der Piezokeramiken 14 verwirklicht, die jeweils gegenüberliegenden elektroakustischen Wandler (beispielsweise die elektroakustischen Wandler 5 und 6) haben entgegengesetzte Polaritätsanordnungen. D.h., dass bei der in Fig. 2 gezeigten Darstellung die beiden Piezokeramiken 14 im Wandler 5 zwei Pluszeichen aufweisen und die beiden im elektroakustischen Wandler 6 verbauten Piezokeramiken mit Negativzeichen dargestellt sind. Dies gilt auch für die weiteren auf der jeweiligen Seite in Reihe befindlichen elektroakustischen Wandler, wobei auch hier eine alternierende Polaritätsanordnung gegeben ist. Mit der in Fig. 2 gezeigten Vorrichtung wird insbesondere eine gute Durchmischung des in der äußeren Wand 4 befindlichen Fluids erreicht. Bezüglich weiterer Details wird auf die Beschreibung von Fig. 1 verwiesen.

Bezüglich Fig. 1 und 2 sei erwähnt, dass hier nicht nur zwei jeweils sich gegenüberliegende Reihen gegeben sein müssen, sondern dass über den Umfang der äußeren Wand 4 verteilt (also wiederum um die Zentralachse 3 angeordnet) auch noch mehr Reihen angeordnet sein können, um hier noch aus mehr Winkelrichtungen eine Ultraschallbeaufschlagung zu erreichen.

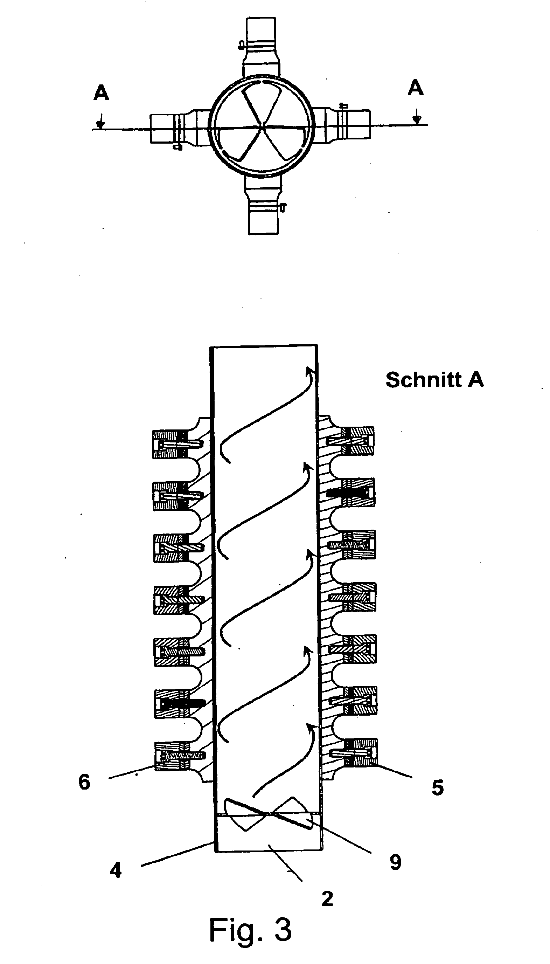

Fig. 3 zeigt eine weitere Ausführung einer erfindungsgemäßen Vorrichtung.

Im Gegensatz zu Fig. 1 und 2 sind hier nicht nur zwei sich gegenüberliegende Reihen von elektroakustischen Wandlern gezeigt, sondern zwei Paare von Reihen, dies ist aus der auf dem Zeichnungsblatt oben dargestellten Draufsicht zu erkennen. Die jeweils untersten Wandler des nicht in der Schnittdarstellung gezeigten Paares sind mit 5' und 6' bezeichnet.

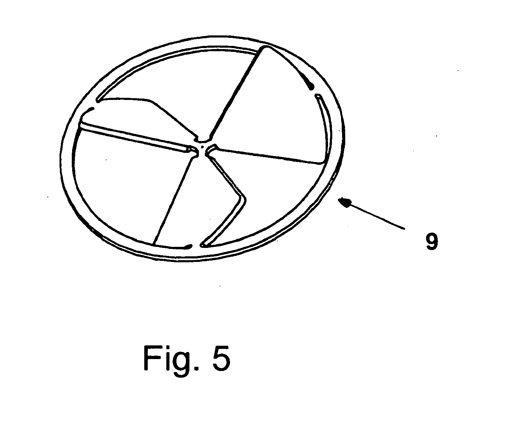

Eine Besonderheit der in Fig. 3 dargestellten Vorrichtung ist ein zusätzliches Wirbelelement 9. Dieses Wirbelelement ist an einem Eingang für fließendes Fluid angeordnet und sorgt dafür, dass vor Ultraschallbeaufschlagung mittels der elektroakustischen Wandler ein mit Feilen dargestellter Drall auf die sich im Raum 2 bewegende/durchfließende Flüssigkeit ausgeübt wird. Das Wirbelelement ist hierbei im Wesentlichen über die gesamte innere Querschnittsfläche der äußeren Wand 4 angeordnet und als Scheibe ausgeführt, die herausstehende Flügel aufweist. Eine vergrößerte Darstellung dieses Wirbelelements 9 ist in Fig. 5 ersichtlich.

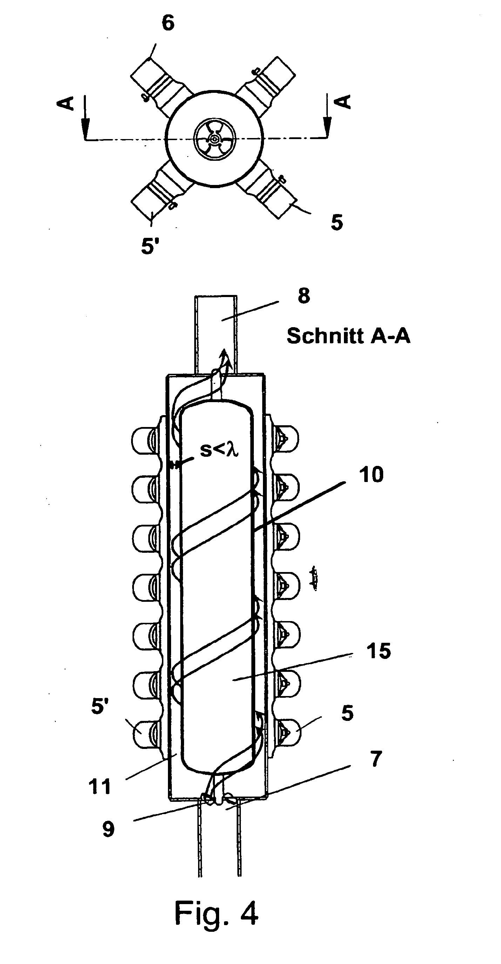

Fig. 4 zeigt, in Entsprechung zu Fig. 3, eine erfindungsgemäße Vorrichtung in der Schnittansicht (unten) sowie einer Draufsicht (oben). Im Unterschied zur Fig. 3 ist hier jedoch der mit Fluid befüllbare Raum 2 deutlich kleiner, da ein Innenwandmodul 15 innerhalb der äußeren Wand 4 vorgesehen ist. Dadurch verbleibt ein relativ geringer Spaltraum 11, der von einem Fluid durchströmbar und sehr intensiv mit Ultraschall beaufschlagbar ist. Der Spalt s, gemessen in orthogonaler Richtung zur Achse 3 von der ultraschallemittierenden Innenfläche bis zur Wand des Innenwandmoduls beträgt weniger als die Fluid-Schallwellenlänge λ.

In Fig. 4 mit Schnittdarstellung, ist hier das Wirbelelement 9 gezeigt, dass das hereinströmende Fluid mit einem Drall beaufschlagt und so um die Außenwand des Innenwandmoduls 15 herum leitet, dass es umlaufend von verschiedenen elektroakustischen Wandlern mit Ultraschallenergie beaufschlagt werden kann.

Es ist möglich, das Innenwandmodul auch austauschbar zu gestalten, um so hier eine Variation der Spalträume vornehmen zu können. Das Innenwandmodul ist vorzugsweise hohl bzw. luftgefüllt. Es ist auch möglich, am Ausgang 8 der Vorrichtung ein Wirbelelement vorzusehnen und nicht nur am Eingang 7.

Fig. 5 zeigt eine Detailansicht eines erfindungsgemäßen Wirbelelements 9, dieses kann allerdings auch anders ausgeführt, beispielsweise mit zusätzlichen Schlitzen oder auch mit weiteren Flächen, die beispielsweise aus den hier nur drei gezeigten Flügeln herausstehen. Außerdem ist auch möglich, mehrere Wirbelzonen innerhalb der Gesamtscheibenfläche vorzusehen, um somit eine unterschiedliche Strömung über den Scheibenquerschnitt hinweg zu erzeugen. Statt des scheibenförmigen Wirbelelementes 9 ist auch eine rohrförmige, ggf. konische Rohrausführung mit einer Innen und Außen aufgeprägten Wendel denkbar.

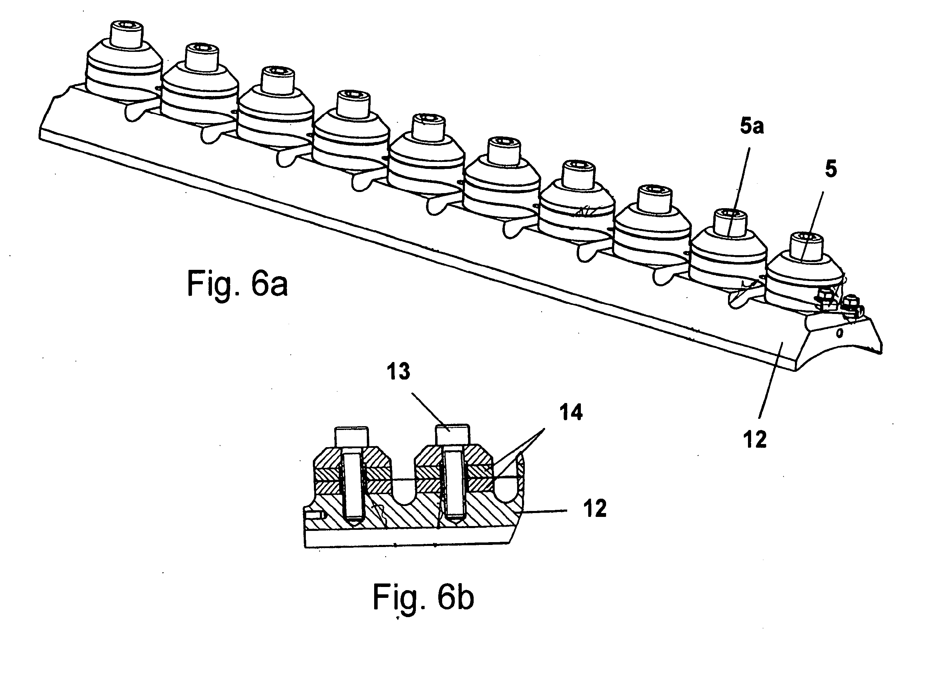

In Fig. 6a und 6b ist nochmals zur Verdeutlichung eine Reihe elektroakustischer Wandler mit gemeinsamem Kopplungsträger gezeigt, in Fig. 6a in einer perspektivischen Ansicht, in Fig. 6b in einem Längsschnitt.

## Patentansprüche

1. Vorrichtung (1) zur Beaufschlagung eines zumindest bereichsweise mit Fluid befüllten Rohres (2) mit Ultraschall, enthaltend mindestens zwei, im Wesentlichen parallel zur Zentralachse (3) des Rohres verlaufende, an der äußeren Wand (4) des Rohres gegenüberliegend angeordnete elektroakustische Wandlerschienen (12) mit jeweils mehreren elektroakustischen Wandlern (5, 6) zur Ultraschallbeaufschlagung des innerhalb des Rohres befindlichen Fluids,
**wobei** der fluidbefüllte Raum des Rohres so ausgestaltet ist, dass die größte orthogonale Abmessung des fluidbefüllten Raums von einer Ultraschall emittierenden Innenfläche des Rohrs zur nächsten fluidbegrenzenden Fläche kleiner als die Schallwellenlänge λ des Fluides ist und wobei der fluidbefüllte Raum (2) einen Eingang (7) für ein fließendes Fluid hat, wobei Ein- und Ausgang (8) des Fluids an derselben Stelle oder Ein- und Ausgang (8) des Fluids an verschiedenen Stellen gegeben sind und wobei im Bereich des Eingangs 7 ein Wirbelelement (9) zur Beaufschlagung einfließenden Fluids mit einem bestimmten Drall vorgesehen ist.

2. Vorrichtung nach Anspruch 1, **dadurch gekennzeichnet, dass** die nächste fluidbegrenzende Fläche die gegenüberliegende Rohrinnenwand ist,
oder
die nächste fluidbegrenzende Fläche Teil eines in das Rohr eingesetzten Bauteils ist.

3. Vorrichtung nach einem der Ansprüche 1 oder 2, **dadurch gekennzeichnet, dass** das Wirbelelement (9) an mindestens einem axialen Ende des fluidbefüllten Raums (2) angeordnet ist.

4. Vorrichtung nach einem der Ansprüche 1 bis 3, **dadurch gekennzeichnet, dass** das Wirbelelement (9) eine größere Querschnittsfläche als der unmittelbar angrenzende fluidbefüllte Raum (2) hat und/oder dass das Wirbelelement (9) als Scheibe mit herausstehenden Flügeln (Flügelrad) oder als konisches Tubusrohr mit aufgeprägter Wendel ausgeführt ist.

5. Vorrichtung nach einem der vorhergehenden Ansprüche, **dadurch gekennzeichnet, dass** eine innerhalb des Rohres (4) angeordnete innere Wand (10) sowie ein umlaufender Spaltraum (11) zwischen Rohrinnenfläche und innerer Wand gegeben ist.

6. Vorrichtung nach Anspruch 5, **dadurch gekennzeichnet, dass** die innere Wand (10) als austauschbares erstes Innenwandmodul ausgeführt ist, das austauschbar ist durch ein zweites Innenwandmodul mit einer größeren Querschnittsfläche zur Verringerung der Querschnittsfläche des Spaltraums (11) bzw. seines Volumens.

7. Vorrichtung nach Anspruch 6, **dadurch gekennzeichnet, dass** das Innenwandmodul hohl und/oder luftbefüllt ist.

8. Vorrichtung nach einem der vorhergehenden Ansprüche, **dadurch gekennzeichnet, dass** der fluidbefüllte Raum (2) in radialer Richtung zwischen 1,0 und 8,0 cm beträgt und der Spaltraum (11) in radialer Richtung bezüglich der Zentralachse (3) zwischen 1,0 cm und 5,0 cm liegt, vorzugsweise zwischen 1,0 cm und 2 cm, beträgt.

9. Vorrichtung nach einem der vorhergehenden Ansprüche, **dadurch gekennzeichnet, dass** die Gesamtleistung der akustischen Wandler (5, 6) zwischen 100 W und 10.000 W und/oder die Betriebsfrequenz der elektroakustischen Wandler (5, 6) zwischen 20 kHz und 100 kHz liegt.

10. Vorrichtung nach Anspruch 9, **dadurch gekennzeichnet, dass** die Wandlerschienen mit elektroakustischen Wandlern (5, 6) aufgebaut sind und Kopplungsträger (12) enthalten, die an die Kontur der äußeren Wand angepasst sind.

11. Vorrichtung nach Anspruch 10, **dadurch gekennzeichnet, dass** mehrere, vorzugsweise zwei, vier oder sechs Wandlerschienen bezüglich der Zentralachse (3) gleichmäßig über den Außenumfang des Rohres (4) verteilt sind, wobei bezüglich der Zentralachse (3) jeweils die in Reihen angeordneten elektroakustischen Wandler sich gegenüberliegen.

12. Vorrichtung nach einem der vorhergehenden Ansprüche, **dadurch gekennzeichnet, dass** die sich bezüglich der Zentralachse (3) jeweils paarweise gegenüberstehenden elektroakustischen Wandler (5, 6) eine gleiche oder entgegengesetzte Polaritätsanordnung aufweisen.

13. Vorrichtung nach einer der vorhergehenden Ansprüche, **dadurch gekennzeichnet, dass** alle elektroakustischen Wandler mit derselben oder auch mit einer unterschiedlichen Ultraschallbetriebsfrequenz betreibbar sind.

14. Vorrichtung nach einem der vorhergehenden Ansprüche, **dadurch gekennzeichnet, dass** vorzugsweise im Bereich des Ausgangs (8) ein weiteres Wirbelelement vorgesehen ist.

## Claims

1. Device (1) for subjecting a tube (2), filled with fluid at least in some regions, to ultrasound, including at least two electroacoustic transducer rails (12) which run substantially parallel to the central axis (3) of the tube, are oppositely arranged on the outer wall (4) of the tube and each have a plurality of electroacoustic transducers (5, 6) for subjecting the fluid situated inside the tube to ultrasound,
the fluid-filled space of the tube being configured such that the greatest orthogonal dimension of the fluid-filled space from an ultrasound-emitting inner surface of the tube to the nearest fluid-bounding surface is less than the acoustic wavelength λ of the fluid, and the fluid-filled space (2) having an entrance (7) for a flowing fluid, the fluid entrance and exit (8) being provided at the same place or the fluid entrance and exit (8) being provided at different places, and a swirl element (9) for subjecting the inflowing fluid to a specific swirl being provided in the region of the entrance 7.

2. Device according to Claim 1, **characterised in that** the nearest fluid-bounding surface is the opposite inner wall of the tube,
or
the nearest fluid-bounding surface is part of a component inserted into the tube.

3. Device according to one of Claim 1 and 2, **characterised in that** the swirl element (9) is arranged at at least one axial end of the fluid-filled space (2).

4. Device according to one of Claims 1 to 3, **characterised in that** the swirl element (9) has a greater cross-sectional area than the immediately adjacent fluid-filled space (2) and/or **in that** the swirl element (9) is embodied as a disc with projecting vanes (impeller wheel) or as a conical tube with impressed helix.

5. Device according to one of the preceding claims, **characterised in that** an inner wall (10) arranged inside the tube (4) and an encircling gap space (11) between the inner surface of the tube and the inner wall is provided.

6. Device according to Claim 5, **characterised in that** the inner wall (10) is embodied as a replaceable first inner-wall module, which is replaceable by a second inner-wall module with a greater cross-sectional area for reducing the cross-sectional area of the gap space (11) or its volume.

7. Device according to Claim 6, **characterised in that** the inner-wall module is hollow and/or filled with air.

8. Device according to one of the preceding claims, **characterised in that** the fluid-filled space (2) is between 1.0 and 8.0 cm in the radial direction and the gap space (11) is between 1.0 cm and 5.0 cm, preferably between 1.0 cm and 2 cm, in the radial direction with respect to the central axis (3).

9. Device according to one of the preceding claims, **characterised in that** the total power of the acoustic transducers (5, 6) is between 100 W and 10,000 W and/or the operating frequency of the electroacoustic transducers (5, 6) is between 20 kHz and 100 kHz.

10. Device according to Claim 9, **characterised in that** the transducer rails are constructed with electroacoustic transducers (5, 6) and include coupling carriers (12) which are adapted to the contour of the outer wall.

11. Device according to Claim 10, **characterised in that** a plurality of, preferably two, four or six, transducer rails are distributed uniformly over the outer circumference of the tube (4) with respect to the central axis (3), the electroacoustic transducers, which are arranged in rows, in each case lying opposite one another with respect to the central axis (3).

12. Device according to one of the preceding claims, **characterised in that** the electroacoustic transducers (5, 6) which are situated in each case in pairs opposite one another with respect to the central axis (3) have the same or an opposite polarity arrangement.

13. Device according to one of the preceding claims, **characterised in that** all of the electroacoustic transducers can be operated with the same or else with a different ultrasound operating frequency.

14. Device according to one of the preceding claims, **characterised in that** a further swirl element is provided preferably in the region of the exit (8).

## Revendications

1. Dispositif (1) pour alimenter un tuyau (2) rempli au moins par endroits de fluide avec des ultrasons, contenant au moins deux rails de convertisseur (12) électroacoustiques, agencés sensiblement parallèlement à l'axe central (3) du tuyau, disposés de façon opposée sur la paroi extérieure (4) du tuyau, dotés de respectivement plusieurs convertisseurs (5, 6) électroacoustiques pour l'alimentation en ultrasons du fluide se trouvant à l'intérieur du tuyau,
l'espace rempli de fluide du tuyau étant conçu de telle sorte que la dimension orthogonale maximale de l'espace rempli de fluide allant d'une surface intérieure, émettant des ultrasons, du tuyau à la surface délimitant du fluide suivante est inférieure à la longueur d'onde sonore λ, du fluide et l'espace (2) rempli de fluide ayant une entrée (7) pour un fluide en circulation, l'entrée et la sortie (8) du fluide se trouvant au même endroit ou bien l'entrée et la sortie (8) du fluide se trouvant en différents endroits et un élément à turbulence (9) pour l'alimentation de fluide entrant avec une certaine rotation étant prévu dans la zone de l'entrée (7).

2. Dispositif selon la revendication 1, **caractérisé en ce que** la surface délimitant du fluide suivante est la paroi interne de tuyau opposée,
ou la prochaine surface délimitant du fluide fait partie d'un composant inséré dans le tuyau.

3. Dispositif selon l'une des revendications 1 ou 2, **caractérisé en ce que** l'élément à turbulence (9) est disposé sur au moins une extrémité axiale de l'espace (2) rempli de fluide.

4. Dispositif selon l'une des revendications 1 à 3, **caractérisé en ce que** l'élément à turbulence (9) a une surface de section plus grande que l'espace (2) rempli de fluide directement contigu et/ou l'élément à turbulence (9) est réalisé sous forme de disque avec des ailettes saillantes (roue à ailettes) ou sous forme de tuyau-tube conique avec une spirale gravée dessus.

5. Dispositif selon l'une des revendications précédentes, **caractérisé en ce qu'**une paroi (10) interne disposée à l'intérieur du tuyau (4) et un espace de fente (11) périphérique sont présents entre la surface interne de tuyau et la paroi interne.

6. Dispositif selon la revendication 5, **caractérisé en ce que** la paroi (10) interne est réalisée sous forme d'un premier module de paroi interne amovible, qui peut être remplacé par un second module de paroi interne avec une surface de section plus grande pour la réduction de la surface de section de l'espace de fente (11) ou de son volume.

7. Dispositif selon la revendication 6, **caractérisé en ce que** le module de paroi interne est creux et/ou rempli d'air.

8. Dispositif selon l'une des revendications précédentes, **caractérisé en ce que** l'espace (2) rempli de fluide se situe entre 1,0 et 8,0 cm dans le sens radial et l'espace de fente (11) dans le sens radial par rapport à l'axe central (3) se situe entre 1,0 cm et 5,0 cm, de préférence entre 1,0 cm et 2 cm.

9. Dispositif selon l'une des revendications précédentes, **caractérisé en ce que** la puissance globale des convertisseurs acoustiques (5, 6) se situe entre 100 W et 10 000 W et/ou la fréquence d'exploitation des convertisseurs électroacoustiques (5, 6) entre 20 kHz et 100 kHz.

10. Dispositif selon la revendication 9, **caractérisé en ce que** les rails de convertisseur sont montés avec des convertisseurs électroacoustiques (5, 6) et contiennent des supports d'accouplement (12), qui sont adaptés au contour de la paroi externe.

11. Dispositif selon la revendication 10, **caractérisé en ce que** plusieurs, de préférence deux, quatre ou six rails de convertisseur sont répartis uniformément sur le pourtour externe du tuyau (4) par rapport à l'axe central (3), à chaque fois les convertisseurs électroacoustiques disposés en rangées se faisant face par rapport à l'axe central (3).

12. Dispositif selon l'une des revendications précédentes, **caractérisé en ce que** les convertisseurs (5, 6) électroacoustiques, se faisant face à chaque fois par paires par rapport à l'axe central (3), présentent un agencement de polarité identique ou opposé.

13. Dispositif selon l'une des revendications précédentes, **caractérisé en ce que** tous les convertisseurs électroacoustiques peuvent être exploités avec la même ou également avec une fréquence d'exploitation aux ultrasons différente.

14. Dispositif selon l'une des revendications précédentes, **caractérisé en ce qu'**un autre élément à turbulence est prévu de préférence dans la zone de la sortie (8).
